# EUROPEAN PATENT SPECIFICATION

(11) **EP 3 925 063 B1**
(45) Date of publication and mention of the grant of the patent: **21.10.2026**
(21) Application number: 20783674.3
(22) Date of filing: 09.03.2020
(51) Int. Cl.: H02M 1/42, H02M 3/156, H02M 1/00

(54) **INTERLEAVED POWER FACTOR CORRECTION CIRCUIT WITH SELF-TUNING REGULATOR**
VERSCHACHTELTE LEISTUNGSFAKTORKORREKTURSCHALTUNGEN MIT SELBSTABSTIMMUNGSREGLER
CIRCUIT DE CORRECTION DE FACTEUR DE PUISSANCE ENTRELACÉS AVEC RÉGULATEUR À RÉGLAGE AUTOMATIQUE

(30) Priority: 29.03.2019 US 201962704062 P
(43) Date of publication of application: 22.12.2021
(73) Proprietor: Murata Manufacturing Co., Ltd., Nagaokakyo-shi, Kyoto 617-8555 (JP)
(72) Inventor: TAN, Longcheng, Markham, Ontario L3R 0J3 (CA)
(74) Representative: Lorenz Seidler Gossel Part. mbB
(86) International application number: PCT/US2020/021641
(87) International publication number: WO 2020/205167

(56) References cited:
- KR-A- 20180 136 268
- US-A1- 2012 250 363
- US-A1- 2012 250 363
- US-A1- 2013 194 848
- US-B2- 7 884 588
- US-B2- 9 240 712
- FU-ZEN CHEN B S: "Digital Control Techniques for Efficiency Improvements in Single-Phase Boost Power Factor Correction Rectifiers", 31 December 2010 (2010-12-31), XP055725612, Retrieved from the Internet <URL:https://scholar.colorado.edu/downloads/d791sg53v> [retrieved on 20200827]

## Description

### BACKGROUND OF THE INVENTION

### 1. Field of the Invention

The present invention relates to self-tuning regulators for interleaved power factor correction (PFC) circuits and devices. More specifically, the present invention relates to self-tuning regulators that counteract inaccuracy and characteristic drift of sampling circuits to enhance current sharing performance in PFC circuits.

### 2. Description of the Related Art

For interleaved PFC, current sharing is achieved by controlling each average inductor current to follow a common reference current. Under light-load conditions where discontinuous and boundary conduction modes occur, average inductor currents are calculated through multiplications of sampled currents and duty cycles with proper coefficients. When sampling circuits are inaccurate, current sharing controllers regulate duty cycles incorrectly or inaccurately so that calculated average inductor currents follow their reference currents, but actual inductor currents remain unbalanced. This condition results in large input current ripples and severe noise at some operating points, especially when the input voltage is direct current (DC).

Because of different characteristic variations, drifts, and resolution issues of sampling circuits in different PFC circuits, it is impossible to eliminate these detrimental influences on current sharing performance by a fixed hardware or firmware compensation solution.

A current-sensing and gain-switching circuit is proposed in Bing et al. (U.S. 9,923,455) to improve current sampling resolution and accuracy under light-load conditions for a PFC circuit by changing sampling gain-amplifiers to increase the resolution when load conditions change from heavy to light. However, this technique requires changing sampling resistors in hardware and changing control gains in firmware when the load condition changes.

Document US 2012/0250363 A1 discloses an interleaved power converter for converting a DC voltage source into a DC voltage output, wherein parallel subcircuits each comprise an inductive element, a rectifying element and a switch which is driven to repeatedly switch on the subcircuits with a phase difference, wherein a current sensor repeatedly determines an input current value associated with each subcircuit at sample points, wherein the switch-on times are adjusted in response to the determined input current values to compensate for imbalances.

Furthermore, Fu-Zen Chen B S: "Digital control techniques for efficiency improvements in single-phase boost power factor correction rectifiers", 31st December 2010, XP 055725612, University of Colorado 2010, discloses a digital controller using a discontinuous conduction mode (DCM) detection circuit, wherein in heavy load operation, passive power sharing is used for interleaved boost PFC rectifiers to increase system power modularity, whereas in light load operation, switch periods are extended to achieve low voltage switching.

Another solution is proposed in Yan (CN 101594049B) to periodically and alternatively change driving signals to an interleaved PFC circuit to achieve current balancing. However, this method can only passively balance currents. If parameters of sampling circuits, power circuits, or driving circuits are not symmetrical, this method cannot actively balance the currents well.

Gabriele et al. (U.S. 9,077,243) achieves current sharing through a common parameter to all phases, which de-multiplexes the common signal into two separate inductor currents by a phase-select signal and a plurality of digital signals. However, the accuracy of separate inductor currents indirectly obtained through de-multiplexing cannot be guaranteed, especially when duty cycles are larger than 0.5 under discontinuous conduction mode, which implies the currents could be unbalanced under such condition.

The current sharing method for an interleaved PFC circuit of Qiongyou et al. (U.S. 7,116,087) is achieved by controlling two sampled inductor currents to the same reference current directly through two integrated circuit chips (UC3845), but this technique does not address sampling inaccuracy or characteristic drifts of sampling circuits and does not address discontinuous conduction mode. Thus, the currents can still be unbalanced under light-load conditions, even though two separate current controllers are used.

Current sharing in Neidorff et al. (U.S. 2007/0253223) is achieved through adjusting phase differences of the interleaved PFC circuit, which attempts to counteract discrepancies of the interleaved phases. However, this technique fails to address the accuracy issues of the sampling circuits and is only applicable to transition modes of a PFC circuit for low-power applications.

### SUMMARY OF THE INVENTION

To overcome the problems described above, preferred embodiments of the present invention provide improved current sharing among phases of an interleaved PFC circuit by counteracting deteriorated accuracy, resolution, and characteristic drift of current sampling circuits through self-tuning regulation, especially under light-load conditions.

Through self-tuning regulation, preferred embodiments of the present invention make current-balancing control immune to characteristic variations, drifts, and resolution issues of sampling circuits of interleaved PFC circuits, without any hardware changes or control gain changes.

Usually a sampling circuit mainly includes current transformers or shunt resistors, signal amplifiers, and analog-digital converters (ADC), etc. Components of the sampling circuit impacts sampling accuracy and resolution, which deteriorate when currents are small. When inaccurate sampled currents are input into current controllers, incorrect control outputs are obtained, which results in unbalanced currents. The preferred embodiments of the present invention can include an interleaved PFC circuit with a self-tuning regulator that improves current sharing performance by counteracting inaccurate sampling under light-load conditions. Preferred embodiments of the invention are specified in the claims.

The features, elements, characteristics, steps, and advantages of the present invention will become more apparent from the following detailed description of preferred embodiments of the present invention with reference to the attached drawings.

### BRIEF DESCRIPTION OF THE DRAWINGS

Fig. 1 shows an interleaved PFC circuit according to a preferred embodiment of the present invention.
Fig. 2 shows a self-tuning regulator circuit, a current controller, and a pulse width modulator according to a preferred embodiment of the present invention.
Fig. 3 shows an example implementation diagram of the JUDGE circuit of Fig. 2 according to a preferred embodiment of the present invention.
Fig. 4 shows an example implementation diagram for the TUNER circuit of Fig. 2 according to a preferred embodiment of the present invention.
Fig. 5 shows inductor currents of an interleaved PFC circuit before implementing self-tuning regulation.
Fig. 6 shows inductor currents of an interleaved PFC circuit after implementing self-tuning regulation according to a preferred embodiment of the present invention.
Fig. 7 shows total input current of an interleaved PFC circuit before implementing self-tuning regulation.
Fig. 8 shows total input current of an interleaved PFC circuit after implementing self-tuning regulation according to a preferred embodiment of the present invention.

### DETAILED DESCRIPTION OF PREFERRED EMBODIMENTS

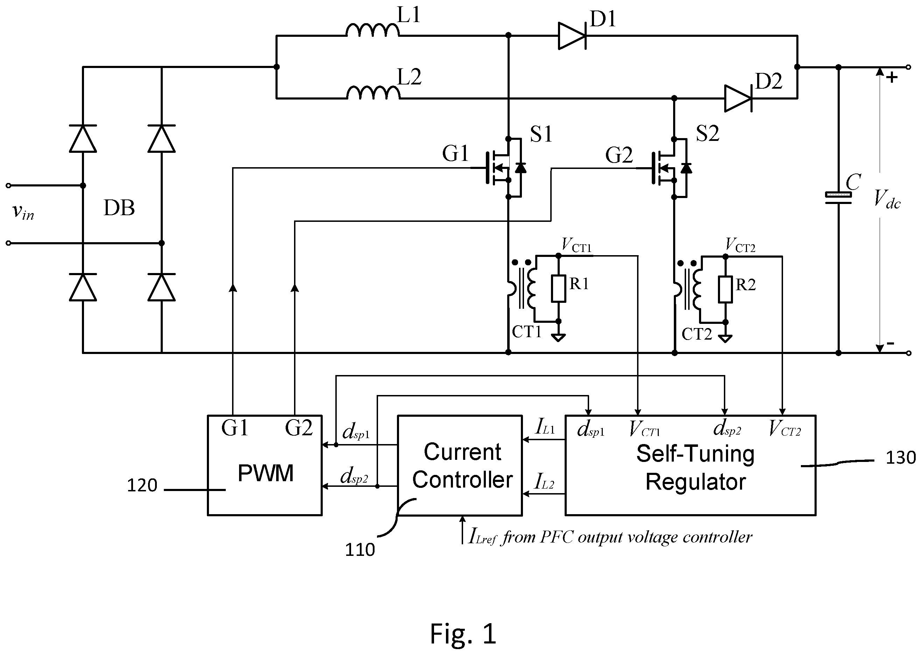

As shown in Fig. 1, an interleaved PFC circuit can include two parallel-interleaved phases or sub-circuits with a shared output capacitor C. Each phase or sub-circuit can include one inductor Lx, one diode Dx, and one transistor Sx, where x=1 or 2 to indicate the phase or sub-circuit number. The input voltage *vᵢₙ*, which can be alternating current (AC) or direct current (DC), is connected to the interleaved PFC circuit through a diode bridge DB, which converts the input voltage *vᵢₙ* into unregulated direct current (DC) voltage. The interleaved PFC circuit then boosts the unregulated DC voltage to a desired regulated DC voltage *V_{dc}.* Although Fig. 1 shows an interleaved PFC circuit with two parallel-interleaved phases or sub-circuits with a shared output capacitor C, an interleaved PFC circuit with more than two parallel-interleaved phases is possible.

In Fig. 1, a self-tuning regulator processes outputs of current transformers, *V*_{*CT*1} and *V*_{*CT*2}, and outputs of the current controllers, i.e., duty cycles *d*_{*sp*1} and *d*_{*sp*2}, to determine tuned average inductor currents *I*_{*L*1} and *I*_{*L*2}. The tuned currents *I*_{*L*1} and *I*_{*L*2} and the current reference *I_{Lref}*, which is generated by the PFC output voltage controller, are transmitted to the current controller 110. After which, the duty cycles *d*_{*sp*1} and *d*_{*sp*2} are obtained and transmitted to the pulse width modulator (PWM) circuit 120 to generate gating signals *G*₁ and *G*₂ that control the on and off switching of transistors *S*₁ and *S*₂. The self-tuning regulator 130, the current controller 110, and the PWM circuit 120 are implemented together in a single microcontroller, although other configurations are possible. For example, each could be implemented in separate microcontrollers or ICs. Any suitable microcontroller can be used.

As shown in FIG. 1, the transistors S1 and S2 can be metal-oxide-semiconductor field-effect transistors (MOSFET). That is, currents flowing through transistors S1 and S2 can be sensed by corresponding current transformers CT1 and CT2 that are connected to the source terminals, each with a corresponding sensing resistor R1 and R2 that converts currents into voltages *V_{CT1}* and *V_{CT2}.* Alternatively, the current transformers CT1 and CT2 could be connected to the drains of the transistor S1 and S2, or to the branches of inductor L1 and L2, and the current transformers CT1 and CT2 can be replaced with shunt resistors or current transducers using the Hall Effect to measure the current.

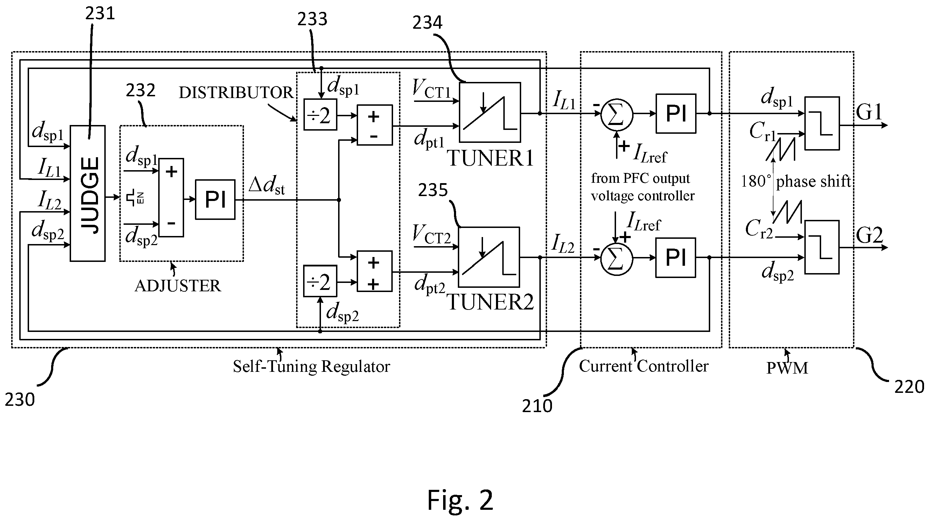

Fig. 2 shows a self-tuning regulator 230, a current controller 210, and a PWM circuit 220, which can be used with the interleaved PFC circuit of Fig. 1. After receiving duty cycles *d*_{*sp*1} and *d*_{*sp*2} and averaged inductor currents *I*_{*L*1} and *I*_{*L*2}, the JUDGE circuit 231 will determine whether to activate or enable the following ADJUSTER circuit 232 to determine a duty cycle adjustment *Δdₛₜ.* In the DISTRIBUTOR circuit 233 following the ADJUSTER circuit 232, the duty cycle adjustment is added to or subtracted from half of the duty cycles *d*_{*sp*1}/2 and *d*_{*sp*2}/2, respectively, to determine tuned duty cycles *d*_{*pt*1} and *d*_{*pt*2} for following TUNER1 234 and TUNER2 235. Based on tuned duty cycles, TUNER1 234 and TUNER2 235 can decide instants to sample outputs of current transformers *V*_{CT1} and *V*_{CT2}, then the tuned average inductor currents *I*_{*L*1} and *I*_{L2} can be obtained. The JUDGE circuit 231, ADJUSTER circuit 232, TUNER1 234, and TUNER2 235 of the self-tuning regulator 230 shown in Fig. 2 can all be implemented together in a single microcontroller. But other configurations are also possible.

As shown in Fig. 2, the self-tuning regulator 230 includes a JUDGE circuit 231, an ADJUSTER circuit 232, a DISTRIBUTOR circuit 233, a TUNER1 circuit 234, and a TUNER2 circuit 235. The JUDGE circuit 231 determines if it is necessary to activate or enable the following ADJUSTER circuit 232 after receiving the average inductor currents *I*_{*L*1} and *I*_{*L*2} and the duty cycles *d*_{*sp*1} and *d*_{*sp*2} as inputs.

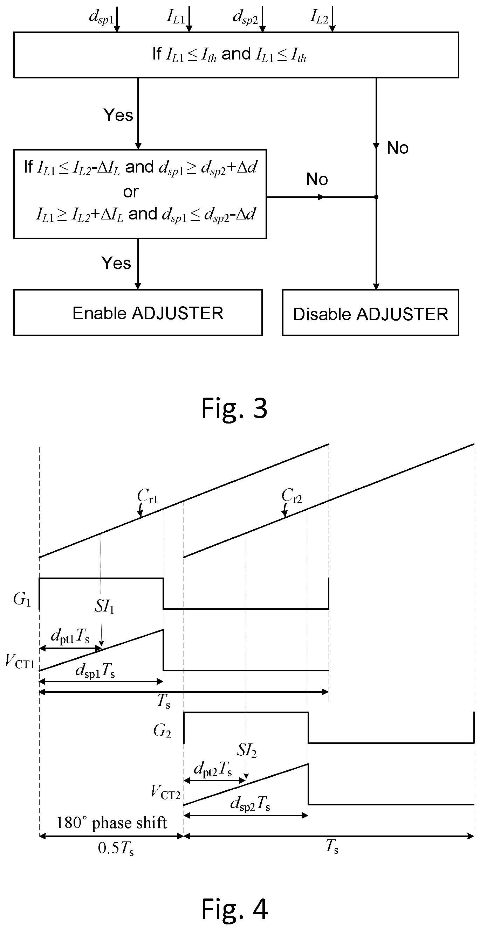

Fig. 3 shows an exemplary implementation of the JUDGE circuit 231 of Fig. 2. In the top block, after receiving the average inductor currents *I*_{*L*1} and *I*_{*L*2} and the duty cycles *d*_{*ps*1} and *d*_{*ps*2} as inputs, the JUDGE circuit 231 determines if the average inductor currents *I*_{*L*1} and *I*_{*L*2} are less than a threshold current value *Iₜₕ,* which is an average inductor current value when the PFC circuit of Fig. 1 operates at boundary conditions. Under boundary conditions, the PFC inductor current starts from zero at the beginning of every switching cycle, and ends at zero at the ending of every switching cycle. Thus, when average inductor current is greater than a threshold value, the PFC will operate in continuous modes. Otherwise, when the average inductor current is less than the threshold value, the PFC will operate in discontinuous modes. If both inductor currents *I*_{*L*1} and *I*_{*L*2} are less than or equal to the threshold current *Iₜₕ,* then the JUDGE circuit 231 determines whether conditions (1) or (2) below are met, where Δ*I_{L}* and Δ*d* are predetermined values for hysteresis to avoid activating and deactivating (or enabling and disabling) the ADJUSTER circuit 232 frequently around the boundary points: ${I}_{L 1} \leq {I}_{L 2} - {ΔI}_{L} and {d}_{sp 1} \geq {d}_{sp 2} + Δd$ (1) ${I}_{L 1} \geq {I}_{L 2} + {ΔI}_{L} and {d}_{sp 1} \leq {d}_{sp 2} - Δd$ (2) The specific values for Δ*I_{L}* and Δ*d* depend on the precision requirements of the current sharing control and the resolution of the sampling circuits.

If at least one of conditions (1) and (2) is met, then the JUDGE circuit 231 activates or enables the ADJUSTER circuit 232. If both currents *I_{L1}* and *I*_{*L*2} are greater than the threshold current *Iₜₕ* or if both conditions (1) and (2) are not met, then the JUDGE circuit 231 disables the ADJUSTER circuit 232.

Once activated or enabled, the ADJUSTER circuit 232 uses a PI (shown in Fig. 2) to control the difference between duty cycles *d*_{*sp*1} and *d*_{*sp*2}, to obtain a duty cycle adjustment Δ*dₛₜ,* which is then passed to the DISTRIBUTOR circuit 233, where it is respectively subtracted from and added to half of *d*_{*sp*1} and *d*_{*sp*2}, as shown in formulas (3) and (4) below, to determine the tuned duty cycles *d*_{*pt*1} and *d*_{*pt*2}. ${d}_{pt 1} = \frac{{d}_{sp 1}}{2} - Δ {d}_{st}$ (3) ${d}_{pt 2} = \frac{{d}_{sp 2}}{2} + Δ {d}_{st}$ (4)

Alternatively, the tuned duty cycles *d*_{*pt*1} and *d*_{*pt*2} can be calculated using formulas (3') and (4') below. ${d}_{pt 1} = \frac{{d}_{sp 1}}{2} + Δ {d}_{st}$ (3') ${d}_{pt 2} = \frac{{d}_{sp 2}}{2} - Δ {d}_{st}$ (4')

Once determined, the two tuned duty cycles *d*_{*pt*1} and *d*_{*pt*2} are respectively transmitted to the TUNER1 234 and the TUNER2 235 of the TUNER circuit of the self-tuning regulator 230, together with voltage outputs *V*_{*CT*1}, *V*_{*CT*2} of transformers CT1 and CT2, to tune the sampling instants *d*_{*pt*1}*Tₛ* and *d*_{*pt*2}*Tₛ,* where *Tₛ* is the switching period, to correct the sampling inaccuracies of the sampling circuits, and therefore improve the current sharing performance of the phases of the PFC circuit.

As shown in Fig. 1, the sampling circuits can include current transformers, sampling resistors, and analog-to-digital converters (ADC), which are not shown in the self-turning regulator 130.

As shown in Fig. 2, the tuned average inductor currents *I*_{*L*1} and *I*_{L2} of the TUNER 1 234 and the TUNER 2 235 circuits are compared with the current reference *I_{Lref},* which is outputted from the PFC output voltage controller, and the differences between them (*I_{Lref}-I*_{*L*1}, *I_{Lref}-I_{L2}*) are transmitted to the following two PIs to update the duty cycles *d*_{*sp*1} and *d*_{*sp*2}, respectively. The updated duty cycles *d*_{*sp*1} and *d*_{*sp*2} are then transmitted to the PWM circuit, to generate gating signals for switches S1 and S2 of the interleaved PFC to make the difference between *I_{L1}* and *I*_{*L*2} smaller, so that the current sharing can be improved. This self-tuning process is iterative until neither (1) or (2) is met and the JUDGE circuit 231 disables the ADJUSTER circuit 232.

If the ADJUSTER circuit 232 is disabled, then the duty cycle adjustment Δ*dₛₜ* remains the same as that obtained at the last moment when the ADJUSTER circuit 232 was still activated or enabled, and no self-tuning regulation is performed.

In the implementation diagram for the TUNER circuits 1, 2 in Fig. 4, sampling instants S*I*₁ and *SI*₂ are determined by multiplying the tuned duty cycles *d*_{*pt*1}, *d*_{*pt*2} and the switching period *Tₛ*, i.e., *d*_{*pt*1}*Tₛ* and *d*_{*pt*2}*Tₛ.* The 180° phase-shifted sawtooth carriers *C*_{*r*1} and *C*_{*r*2} are generated by circuits or dedicated microchips. In tuning the duty cycles *d*_{*pt*1} and *d*_{*pt*2} using formulas (3) and (4), the sampling instants *S*I₁ and *SI*₂ will vary within a range of half of a duty cycle by the adjustment Δ*dₛₜ*, unlike conventional methods where the sampling instants are fixed at half of the duty cycles.

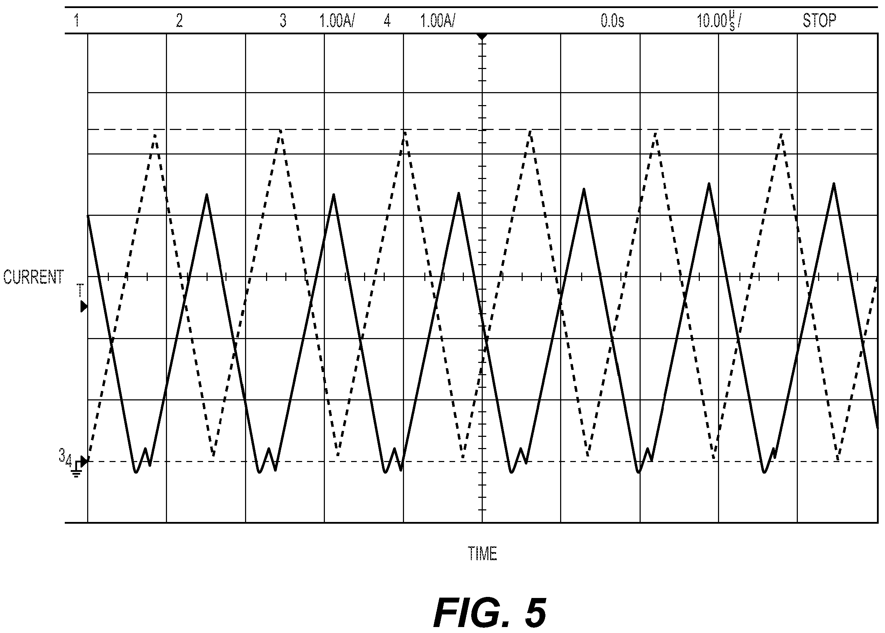

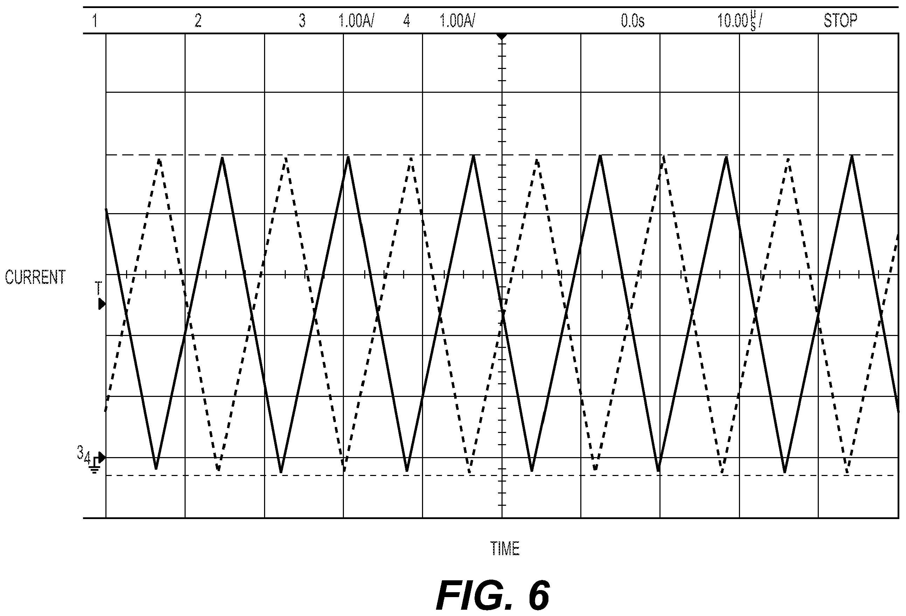

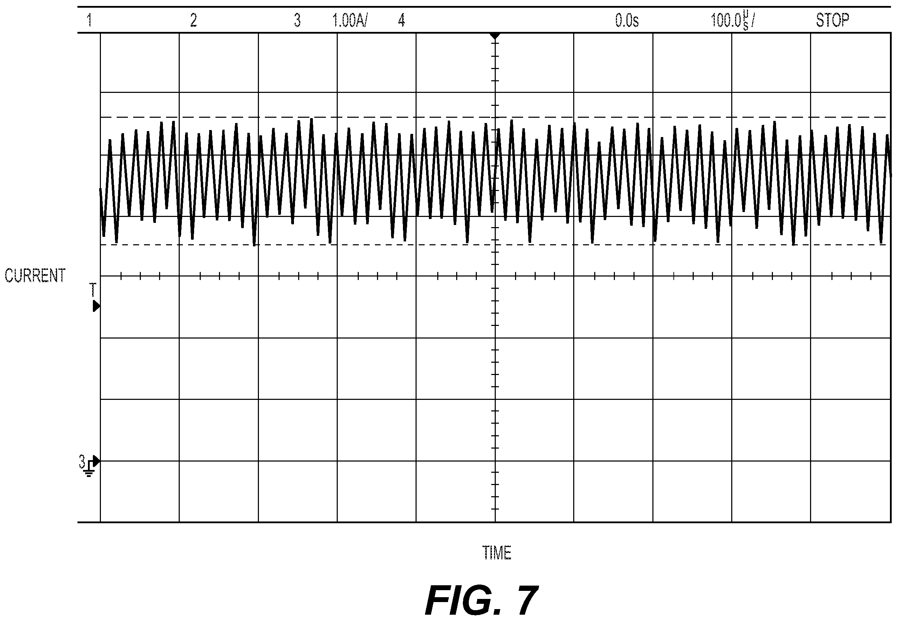

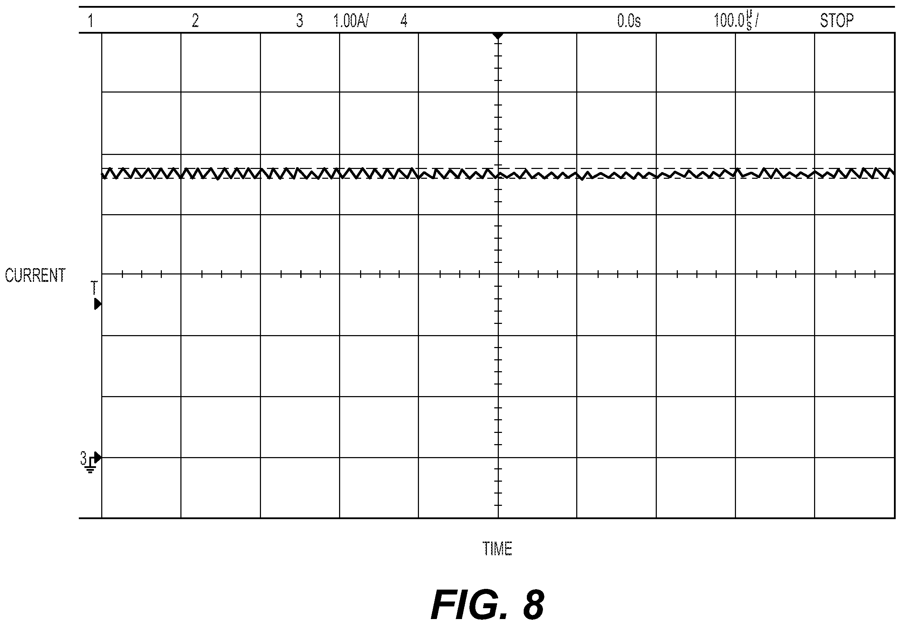

The performance of the self-tuning regulator for the interleaved PFC circuit has been verified through experiments, where the input voltage is chosen to be DC. As shown in Fig. 5, the inductor currents of two inductors in an interleaved PFC circuit are unbalanced before the self-tuning regulation is implemented. The inductor currents become well balanced after implementing the self-tuning regulation, as shown in Fig. 6. Figs. 7 and 8, respectively, show total input currents of an interleaved PFC circuit before and after implementing self-tuning regulation. In comparing the total input currents of Figs. 7 and 8, it is shown that with self-tuning regulation, the peak-to-peak ripple of the total input current of an interleaved PFC circuit can be greatly reduced from about 45% to about 3.2% of the average value.

It should be understood that the foregoing description is only illustrative of the present invention. Various alternatives and modifications can be devised by those skilled in the art without departing from the present invention. Accordingly, the present invention is intended to embrace all such alternatives, modifications, and variances that fall within the scope of the appended claims.

## Claims

1. A power factor correction circuit comprising:
input voltage terminals (Vᵢₙ);
a diode rectifier connected to the input voltage terminals (Vᵢₙ);
a first boost phase connected to the diode rectifier and including a first transistor, a first diode, a first inductor, and a first current sensor (CT1);
a second boost phase connected to the diode rectifier and including a second transistor, a second diode, a second inductor, and a second current sensor (CT2);
an output capacitor (C) connected to the first and second boost phases;
a current controller (110, 210) configured to:
receive a tuned average inductor current signal I_{L1} and a tuned average inductor current signal I_{L2};
determine a first duty cycle dₛₚ₁ for the first transistor by regulating a difference between the tuned average inductor current signal I_{L1} in the first boost phase and a reference current through a first PI controller;
determine a second duty cycle dₛₚ₂ for the second transistor by regulating the difference between the tuned average inductor current signal I_{L2} in the second boost phase and the reference current through a second PI controller;
a pulse width modulator (120) configured to generate gating signals G1 and G2 with 180° phase shift for the first and second transistors based on the first and the second duty cycles dₛₚ₁ and dₛₚ₂ received from the current controller; and
a self-tuning regulator (130, 230) configured to:
upon detection, by the self-tuning regulator (130, 230) using a judge circuitry (231), that the tuned average inductor current signals I_{L1} and I_{L2} are unbalanced, iteratively tune sampling instants dₚₜ₁T_{S} and dₚₜ₂T_{S}, which are products of the first and the second tuned duty cycles dₚₜ₁, dₚₜ₂ with switching period T_{S}, respectively, by iteratively adjusting the first tuned duty cycle dₚₜ₁ and the second tuned duty cycle dₚₜ₂ to obtain the tuned average inductor current signals I_{L1} and I_{L2} by sampling inductor currents from the first current sensor (CT1) in the first boost circuit and from the second current sensor (CT2) in the second boost circuit; and
provide the tuned average inductor current signal I_{L1} and the tuned average inductor current signal I_{L2} to the current controller; wherein
iteratively adjusting the first tuned duty cycle dₚₜ₁ and the second tuned duty cycle dₚₜ₂ includes:
calculating a difference between the first duty cycle dₛₚ₁ and the second duty cycle dₛₚ₂ and transmitting the difference to a first PI controller to obtain a duty cycle adjustment Δdₛₜ;
determining a tuned duty cycle dₚₜ₁ of the first boost phase and a tuned duty cycle dₚₜ₂ of the second boost phase based on: ${d}_{pt 1} = \frac{{d}_{sp 1}}{2} - Δ {d}_{st}$ (1) ${d}_{pt 2} = \frac{{d}_{sp 2}}{2} + Δ {d}_{st}$ (2); or ${d}_{pt 1} = \frac{{d}_{sp 1}}{2} + Δ {d}_{st}$ (1') ${d}_{pt 2} = \frac{{d}_{sp 2}}{2} - Δ {d}_{st}$ (2');
sampling currents in the first boost phase at instant t₁ = dₚₜ₁Tₛ and in the second boost phase at instant t₂ = dₚₜ₂Tₛ, where Tₛ is a sampling period, to obtain the respective tuned average inductor current signals I_{L1} and I_{L2}; and
updating the first duty cycle dₛₚ₁ by regulating the difference between the tuned average inductor current signal I_{L1} and the reference current through a second PI controller of the current controller (110, 210), and updating the second duty cycle dₛₚ₂ by regulating the difference between the second tuned average inductor current signal I_{L2} and the same reference current through a third PI controller of the current controller (110, 210).

2. The power factor correction circuit of claim 1, wherein
the self-tuning regulator (130, 230) is configured to iteratively adjust the first tuned duty cycle dpt₁ and the second tuned duty cycle dpt₂ only if:
both the first tuned average inductor current I_{L1} in the first boost phase and the second tuned average inductor current I_{L2} in the second boost phase are less than or equal to a threshold current *Iₜₕ*; and
either: ${I}_{L 1} \leq {I}_{L 2} - {ΔI}_{L} and {d}_{sp 1} \geq {d}_{sp 2} + Δd$ (3) or ${I}_{L 1} \geq {I}_{L 2} + {ΔI}_{L} and {d}_{sp 1} \leq {d}_{sp 2} - Δd$ (4)
where *ΔI_{L}* and Δ*d* are predetermined values; and
otherwise, the self-tuning regulator (130, 230) does not iteratively adjust the first tuned duty cycle dₚₜ₁ and the second tuned duty cycle dₚₜ₂.

3. The power factor correction circuit of claim 1, wherein the self-tuning regulator (130, 230) includes:
adjuster circuitry (232) configured to determine said duty cycle adjustment Δdₛₜ based on the duty cycles dₛₚ₁ and dₛₚ₂;
distributor circuitry (233) configured to determine the tuned duty cycles dₚₜ₁ and dₚₜ₂ based on the duty cycles dₛₚ₁ and dₛₚ₂ and the duty cycle adjustment Δdₛₜ;
tuner circuitry (234) configured to tune the sampling instants of the average inductor currents I_{L1} and I_{L2} in the first boost phase and the second boost phase based on the tuned duty cycles dₚₜ₁ and dₚₜ₂;
the judge circuitry (231) is configured to determine whether to activate the adjuster circuitry (231) based on the average inductor currents I_{L1} and I_{L2} and the duty cycles dₛₚ₁ and dₛₚ₂.

4. The power factor correction circuit of claim 3, wherein the adjuster circuitry (232) is configured to determine the duty cycle adjustment Δdₛₜ by inputting a duty cycle difference between the first duty cycle dₛₚ₁ of the first transistor and the second duty cycle dₛₚ₂ of the second transistor to said first PI controller.

5. The power factor correction circuit of claim 3, wherein the distributor circuitry (233) is configured to:
subtract the duty cycle adjustment Δdₛₜ from half of one of the first duty cycle dₛₚ₁ and the second duty cycle dₛₚ₂ to obtain the first tuned duty cycle dₚₜ₁; add
the duty cycle adjustment Δdₛₜ to half of the other one of the first duty cycle dₛₚ₁ and the second duty cycle dₛₚ₂ to obtain the second tuned duty cycle dₚₜ₂; and
transmit the first tuned duty cycle dₚₜ₁ and the second tuned duty cycle dₚₜ₂ to the tuner circuitry (234).

6. The power factor correction circuit of claim 3, wherein the tuner circuitry (234) is configured to:
determine said sampling instants of inductor currents by multiplying both of the first tuned duty cycle dₚₜ₁ and the second tuned duty dₚₜ₂ cycle by said switching period Tₛ; and
sample the inductor currents in the first boost circuit and in the second boost circuit at the determined sampling instants.

7. The power factor correction circuit of claim 3, wherein: the output capacitor (C) is connected to a positive terminal and a negative terminal of a direct current voltage output.

8. The power factor correction circuit of claim 7, wherein each of the first and the second current sensors is a transformer.

9. The power factor correction circuit of claim 7, wherein the judge circuitry (231) is configured to activate the adjuster circuitry (232):
if the average inductor currents I_{L1} and I_{L2} are less than or equal to a threshold value; and
if a first current in the first inductor is less than or equal to a difference between a second current in the second inductor and a predetermined inductor current value, and the first duty cycle dₛₚ₁ of the first transistor is greater than or equal to a sum of the second duty cycle dₛₚ₂ of the second transistor and a predetermined duty cycle value; or
if the first current in the first inductor is greater than or equal to a sum of the second current in the second inductor and the predetermined inductor current value, and the first duty cycle dₛₚ₁ of the first transistor is less than or equal to a difference between the second duty cycle dₛₚ₂ of the second transistor and the predetermined duty cycle value.

## Patentansprüche

1. Leistungsfaktorkorrekturschaltung, umfassend:
Eingangsspannungsanschlüsse (Vᵢₙ);
einen Diodengleichrichter, der mit den Eingangsspannungsanschlüssen (Vᵢₙ) verbunden ist;
eine erste Hochsetzphase, die mit dem Diodengleichrichter verbunden ist und einen ersten Transistor, eine erste Diode, eine erste Induktivität und einen ersten Stromsensor (CT1) beinhaltet;
eine zweite Hochsetzphase, die mit dem Diodengleichrichter verbunden ist und einen zweiten Transistor, eine zweite Diode, eine zweite Induktivität und einen zweiten Stromsensor (CT2) beinhaltet;
einen Ausgangskondensator (C), der mit der ersten und der zweiten Hochsetzphase verbunden ist;
einen Stromregler (110, 210), der konfiguriert ist zum:
Empfangen eines abgestimmten gemittelten Induktivitätsstromsignals I_{L1} und eines abgestimmten gemittelten Induktivitätsstromsignals I_{L2};
Bestimmen eines ersten Tastverhältnisses dₛₚ₁ für den ersten Transistor durch Regeln einer Differenz zwischen dem abgestimmten gemittelten Induktivitätsstromsignal I_{L1} in der ersten Hochsetzphase und einem Referenzstrom über einen ersten Pl-Regler;
Bestimmen eines zweiten Tastverhältnisses dₛₚ₂ für den zweiten Transistor durch Regeln der Differenz zwischen dem abgestimmten gemittelten Induktivitätsstromsignal I_{L2} in der zweiten Hochsetzphase und dem Referenzstrom über einen zweiten Pl-Regler;
einen Pulsweitenmodulator (120), der konfiguriert ist zum Erzeugen von Ansteuersignalen G1 und G2 mit 180° Phasenverschiebung für den ersten und den zweiten Transistor basierend auf dem ersten und dem zweiten Tastverhältnis dₛₚ₁ und dₛₚ₂, die von dem Stromregler empfangen werden; und
einen selbsteinstellenden Regler (130, 230), der konfiguriert ist zum:
bei Erkennung durch den selbsteinstellenden Regler (130, 230) unter Verwendung einer Beurteilungsschaltungsanordnung (231), dass die abgestimmten gemittelten Induktivitätsstromsignale I_{L1} und I_{L2} unsymmetrisch sind, iterativen Abstimmen von Abtastzeitpunkten dₚₜ₁T_{S} und dₚₜ₂Tₛ, welche Produkte des ersten und des zweiten abgestimmten Tastverhältnisses dₚₜ₁, dₚₜ₂ mit einer Schaltperiode T_{S} sind, jeweils durch iteratives Anpassen des ersten abgestimmten Tastverhältnisses dₚₜ₁ und des zweiten abgestimmten Tastverhältnisses dₚₜ₂, um die abgestimmten gemittelten Induktivitätsstromsignale I_{L1} und I_{L2} durch Abtasten von Induktivitätsströmen von dem ersten Stromsensor (CT1) in der ersten Hochsetzschaltung und von dem zweiten Stromsensor (CT2) in der zweiten Hochsetzschaltung zu erhalten; und
Bereitstellen des abgestimmten gemittelten Induktivitätsstromsignals I_{L1} und des abgestimmten gemittelten Induktivitätsstromsignals I_{L2} an den Stromregler; wobei
das iterative Anpassen des ersten abgestimmten Tastverhältnisses dₚₜ₁ und des zweiten abgestimmten Tastverhältnisses dₚₜ₂ beinhaltet:
Berechnen einer Differenz zwischen dem ersten Tastverhältnis dₛₚ₁ und dem zweiten Tastverhältnis dₛₚ₂ und Übertragen der Differenz an einen ersten Pl-Regler, um eine Tastverhältnisanpassung Δdₛₜ zu erhalten;
Bestimmen eines abgestimmten Tastverhältnisses dₚₜ₁ der ersten Hochsetzphase und eines abgestimmten Tastverhältnisses dₚₜ₂ der zweiten Hochsetzphase basierend auf: ${d}_{pt 1} = \frac{{d}_{sp 1}}{2} - Δ {d}_{st}$ (1) ${d}_{pt 2} = \frac{{d}_{sp 2}}{2} + Δ {d}_{st}$ (2); oder ${d}_{pt 1} = \frac{{d}_{sp 1}}{2} + Δ {d}_{st}$ (1') ${d}_{pt 2} = \frac{{d}_{sp 2}}{2} - Δ {d}_{st}$ (2');
Abtasten von Strömen in der ersten Hochsetzphase zum Zeitpunkt t₁ = dₚₜ₁T_{S} und in der zweiten Hochsetzphase zum Zeitpunkt t₂ = dₚₜ₂Tₛ, wobei Tₛ eine Abtastperiode ist, um die jeweiligen abgestimmten gemittelten Induktivitätsstromsignale I_{L1} und I_{L2} zu erhalten; und
Aktualisieren des ersten Tastverhältnisses dₛₚ₁ durch Regeln der Differenz zwischen dem abgestimmten gemittelten Induktivitätsstromsignal I_{L1} und dem Referenzstrom über einen zweiten Pl-Regler des Stromreglers (110, 210), und Aktualisieren des zweiten Tastverhältnisses dₛₚ₂ durch Regeln der Differenz zwischen dem zweiten abgestimmten gemittelten Induktivitätsstromsignal I_{L2} und demselben Referenzstrom über einen dritten Pl-Regler des Stromreglers (110, 210).

2. Leistungsfaktorkorrekturschaltung nach Anspruch 1, wobei
der selbsteinstellende Regler (130, 230) konfiguriert ist zum iterativen Anpassen des ersten abgestimmten Tastverhältnisses dₚₜ₁ und des zweiten abgestimmten Tastverhältnisses dₚₜ₂ nur dann, wenn:
sowohl der erste abgestimmte gemittelte Induktivitätsstrom I_{L1} in der ersten Hochsetzphase als auch der zweite abgestimmte gemittelte Induktivitätsstrom I_{L2} in der zweiten Hochsetzphase kleiner oder gleich einem Schwellenstrom *Iₜₕ* sind; und
entweder: ${I}_{L 1} \leq {I}_{L 2} - {ΔI}_{L} und {d}_{sp 1} \geq {d}_{sp 2} + Δd$ (3) oder ${I}_{L 1} \geq {I}_{L 2} + {ΔI}_{L} und {d}_{sp 1} \leq {d}_{sp 2} - Δd$ (4)
wobei Δ*I_{L}* und *Δd* vorbestimmte Werte sind; und
andernfalls der selbsteinstellende Regler (130, 230) das erste abgestimmte Tastverhältnis dₚₜ₁ und das zweite abgestimmte Tastverhältnis dₚₜ₂ nicht iterativ anpasst.

3. Leistungsfaktorkorrekturschaltung nach Anspruch 1, wobei der selbsteinstellende Regler (130, 230) beinhaltet:
Einstellerschaltungsanordnung (232), die konfiguriert ist zum Bestimmen der Tastverhältnisanpassung Δdₛₜ basierend auf den Tastverhältnissen dₛₚ₁ und dₛₚ₂;
Verteilerschaltungsanordnung (233), die konfiguriert ist zum Bestimmen der abgestimmten Tastverhältnisse dₚₜ₁ und dₚₜ₂ basierend auf den Tastverhältnissen dₛₚ₁ und dₛₚ₂ und der Tastverhältnisanpassung Δdst;
Abstimmerschaltungsanordnung (234), die konfiguriert ist zum Abstimmen der Abtastzeitpunkte der gemittelten Induktivitätsströme I_{L1} und I_{L2} in der ersten Hochsetzphase und der zweiten Hochsetzphase basierend auf den abgestimmten Tastverhältnissen dₚₜ₁ und dpt2;
die Beurteilungsschaltungsanordnung (231) konfiguriert ist zum Bestimmen, ob die Einstellerschaltungsanordnung (231) aktiviert werden soll, basierend auf den gemittelten Induktivitätsströmen I_{L1} und I_{L2} und den Tastverhältnissen dₛₚ₁ und dₛₚ₂.

4. Leistungsfaktorkorrekturschaltung nach Anspruch 3, wobei die Einstellerschaltungsanordnung (232) konfiguriert ist zum Bestimmen der Tastverhältnisanpassung Δdₛₜ durch Eingeben einer Tastverhältnisdifferenz zwischen dem ersten Tastverhältnis dₛₚ₁ des ersten Transistors und dem zweiten Tastverhältnis dsₚ₂ des zweiten Transistors in den ersten Pl-Regler.

5. Leistungsfaktorkorrekturschaltung nach Anspruch 3, wobei die Verteilerschaltungsanordnung (233) konfiguriert ist zum:
Subtrahieren der Tastverhältnisanpassung Δdₛₜ von der Hälfte eines von dem ersten Tastverhältnis dₛₚ₁ und dem zweiten Tastverhältnis dₛₚ₂, um das erste abgestimmte Tastverhältnis dₚₜ₁ zu erhalten;
Addieren der Tastverhältnisanpassung Δdst zur Hälfte des anderen von dem ersten Tastverhältnis dₛₚ₁ und dem zweiten Tastverhältnis dₛₚ₂, um das zweite abgestimmte Tastverhältnis dₚₜ₂ zu erhalten; und
Übertragen des ersten abgestimmten Tastverhältnisses dₚₜ₁ und des zweiten abgestimmten Tastverhältnisses dₚₜ₂ an die Abstimmerschaltungsanordnung (234).

6. Leistungsfaktorkorrekturschaltung nach Anspruch 3, wobei die Abstimmerschaltungsanordnung (234) konfiguriert ist zum:
Bestimmen der Abtastzeitpunkte von Induktivitätsströmen durch Multiplizieren von sowohl dem ersten abgestimmten Tastverhältnis dₚₜ₁ als auch dem zweiten abgestimmten Tastverhältnis dₚₜ₂ mit der Schaltperiode Tₛ; und
Abtasten der Induktivitätsströme in der ersten Hochsetzschaltung und in der zweiten Hochsetzschaltung zu den bestimmten Abtastzeitpunkten.

7. Leistungsfaktorkorrekturschaltung nach Anspruch 3, wobei: der Ausgangskondensator (C) mit einem positiven Anschluss und einem negativen Anschluss eines Gleichspannungsausgangs verbunden ist.

8. Leistungsfaktorkorrekturschaltung nach Anspruch 7, wobei jeder von dem ersten und dem zweiten Stromsensor ein Transformator ist.

9. Leistungsfaktorkorrekturschaltung nach Anspruch 7, wobei die Beurteilungsschaltungsanordnung (231) konfiguriert ist zum Aktivieren der Einstellerschaltungsanordnung (232):
wenn die gemittelten Induktivitätsströme I_{L1} und I_{L2} kleiner oder gleich einem Schwellenwert sind; und
wenn ein erster Strom in der ersten Induktivität kleiner oder gleich einer Differenz zwischen einem zweiten Strom in der zweiten Induktivität und einem vorbestimmten Induktivitätsstromwert ist und das erste Tastverhältnis dₛₚ₁ des ersten Transistors größer oder gleich einer Summe des zweiten Tastverhältnisses dₛₚ₂ des zweiten Transistors und eines vorbestimmten Tastverhältniswerts ist; oder
wenn der erste Strom in der ersten Induktivität größer oder gleich einer Summe des zweiten Stroms in der zweiten Induktivität und des vorbestimmten Induktivitätsstromwerts ist und das erste Tastverhältnis dₛₚ₁ des ersten Transistors kleiner oder gleich einer Differenz zwischen dem zweiten Tastverhältnis dₛₚ₂ des zweiten Transistors und dem vorbestimmten Tastverhältniswert ist.

## Revendications

1. Circuit de correction du facteur de puissance comprenant :
des bornes de tension d'entrée (Vᵢₙ) ;
un redresseur à diodes connecté aux bornes de tension d'entrée (Vᵢₙ) ;
une première phase élévatrice connectée au redresseur à diodes et incluant un premier transistor, une première diode, une première inductance et un premier capteur de courant (CT1) ;
une deuxième phase élévatrice connectée au redresseur à diodes et incluant un deuxième transistor, une deuxième diode, une deuxième inductance et un deuxième capteur de courant (CT2) ;
un condensateur de sortie (C) connecté aux première et deuxième phases élévatrices ;
un contrôleur de courant (110, 210) configuré pour :
recevoir un signal de courant d'inductance moyen accordé I_{L1} et un signal de courant d'inductance moyen accordé I_{L2} ;
déterminer un premier rapport cyclique dₛₚ₁ pour le premier transistor en régulant une différence entre le signal de courant d'inductance moyen accordé I_{L1} dans la première phase élévatrice et un courant de référence par l'intermédiaire d'un premier régulateur PI ;
déterminer un deuxième rapport cyclique dₛₚ₂ pour le deuxième transistor en régulant la différence entre le signal de courant d'inductance moyen accordé I_{L2} dans la deuxième phase élévatrice et le courant de référence par l'intermédiaire d'un deuxième régulateur PI ;
un modulateur de largeur d'impulsion (120) configuré pour générer des signaux de commande de grille G1 et G2 avec un déphasage de 180° pour les premier et deuxième transistors sur la base des premier et deuxième rapports cycliques dₛₚ₁ et dₛₚ₂ reçus du contrôleur de courant ; et
un régulateur à auto-accord (130, 230) configuré pour :
lors de la détection, par le régulateur à auto-accord (130, 230) à l'aide d'un circuit d'évaluation (231), que les signaux de courant d'inductance moyen accordés I_{L1} et I_{L2} sont déséquilibrés, accorder de manière itérative des instants d'échantillonnage dₚₜ₁T_{S} et dₚₜ₂Tₛ, qui sont des produits des premier et deuxième rapports cycliques accordés dₚₜ₁, dₚₜ₂ avec la période de commutation T_{S}, respectivement, en ajustant de manière itérative le premier rapport cyclique accordé dₚₜ₁ et le deuxième rapport cyclique accordé dₚₜ₂ pour obtenir les signaux de courant d'inductance moyen accordés I_{L1} et I_{L2} par échantillonnage de courants d'inductance à partir du premier capteur de courant (CT1) dans le premier circuit élévateur et à partir du deuxième capteur de courant (CT2) dans le deuxième circuit élévateur ; et
fournir le signal de courant d'inductance moyen accordé I_{L1} et le signal de courant d'inductance moyen accordé I_{L2} au contrôleur de courant ; dans lequel
l'ajustement itératif du premier rapport cyclique accordé dₚₜ₁ et du deuxième rapport cyclique accordé dₚₜ₂ inclut :
calculer une différence entre le premier rapport cyclique dₛₚ₁ et le deuxième rapport cyclique dₛₚ₂ et transmettre la différence à un premier régulateur PI pour obtenir un ajustement de rapport cyclique Δdₛₜ ;
déterminer un rapport cyclique accordé dₚₜ₁ de la première phase élévatrice et un rapport cyclique accordé dₚₜ₂ de la deuxième phase élévatrice sur la base de : ${d}_{pt 1} = \frac{{d}_{sp 1}}{2} - Δ {d}_{st}$ (1) ${d}_{pt 2} = \frac{{d}_{sp 2}}{2} + Δ {d}_{st}$ (2); ou ${d}_{pt 1} = \frac{{d}_{sp 1}}{2} + Δ {d}_{st}$ (1') ${d}_{pt 2} = \frac{{d}_{sp 2}}{2} - Δ {d}_{st}$ (2');
échantillonner des courants dans la première phase élévatrice à l'instant t₁ = dₚₜ₁T_{S} et dans la deuxième phase élévatrice à l'instant t₂ = dₚₜ₂Tₛ, où Tₛ est une période d'échantillonnage, pour obtenir les signaux de courant d'inductance moyen accordés respectifs I_{L1} et I_{L2} ; et
mettre à jour le premier rapport cyclique dₛₚ₁ en régulant la différence entre le signal de courant d'inductance moyen accordé I_{L1} et le courant de référence par l'intermédiaire d'un deuxième régulateur PI du contrôleur de courant (110, 210), et mettre à jour le deuxième rapport cyclique dₛₚ₂ en régulant la différence entre le deuxième signal de courant d'inductance moyen accordé I_{L2} et le même courant de référence par l'intermédiaire d'un troisième régulateur PI du contrôleur de courant (110, 210).

2. Circuit de correction du facteur de puissance selon la revendication 1, dans lequel
le régulateur à auto-accord (130, 230) est configuré pour ajuster de manière itérative le premier rapport cyclique accordé dₚₜ₁ et le deuxième rapport cyclique accordé dₚₜ₂ seulement si :
à la fois le premier courant d'inductance moyen accordé I_{L1} dans la première phase élévatrice et le deuxième courant d'inductance moyen accordé I_{L2} dans la deuxième phase élévatrice sont inférieurs ou égaux à un courant de seuil *Iₜₕ* ; et
soit : ${I}_{L 1} \leq {I}_{L 2} - {ΔI}_{L} et {d}_{sp 1} \geq {d}_{sp 2} + Δd$ (3)
soit ${I}_{L 1} \geq {I}_{L 2} + {ΔI}_{L} et {d}_{sp 1} \leq {d}_{sp 2} - Δd$ (4)
où Δ*I_{L}* et Δ*d* sont des valeurs prédéterminées ; et
autrement, le régulateur à auto-accord (130, 230) n'ajuste pas de manière itérative le premier rapport cyclique accordé dₚₜ₁ et le deuxième rapport cyclique accordé dₚₜ₂.

3. Circuit de correction du facteur de puissance selon la revendication 1, dans lequel le régulateur à auto-accord (130, 230) inclut :
un circuit d'ajustement (232) configuré pour déterminer ledit ajustement de rapport cyclique Δdₛₜ sur la base des rapports cycliques dₛₚ₁ et dₛₚ₂ ;
un circuit de distribution (233) configuré pour déterminer les rapports cycliques accordés dₚₜ₁ et dₚₜ₂ sur la base des rapports cycliques dₛₚ₁ et dₛₚ₂ et de l'ajustement de rapport cyclique Δdₛₜ ;
un circuit d'accord (234) configuré pour accorder les instants d'échantillonnage des courants d'inductance moyens I_{L1} et I_{L2} dans la première phase élévatrice et la deuxième phase élévatrice sur la base des rapports cycliques accordés dₚₜ₁ et dₚₜ₂ ;
le circuit d'évaluation (231) est configuré pour déterminer s'il faut activer le circuit d'ajustement (231) sur la base des courants d'inductance moyens I_{L1} et I_{L2} et des rapports cycliques dₛₚ₁ et dₛₚ₂.

4. Circuit de correction du facteur de puissance selon la revendication 3, dans lequel le circuit d'ajustement (232) est configuré pour déterminer l'ajustement de rapport cyclique Δdₛₜ en appliquant à l'entrée dudit premier régulateur PI une différence de rapport cyclique entre le premier rapport cyclique dₛₚ₁ du premier transistor et le deuxième rapport cyclique dₛₚ₂ du deuxième transistor.

5. Circuit de correction du facteur de puissance selon la revendication 3, dans lequel le circuit de distribution (233) est configuré pour :
soustraire l'ajustement de rapport cyclique Δdₛₜ de la moitié de l'un parmi le premier rapport cyclique dₛₚ₁ et le deuxième rapport cyclique dsₚ₂ pour obtenir le premier rapport cyclique accordé dₚₜ₁ ;
ajouter l'ajustement de rapport cyclique Δdₛₜ à la moitié de l'autre parmi le premier rapport cyclique dₛₚ₁ et le deuxième rapport cyclique dₛₚ₂ pour obtenir le deuxième rapport cyclique accordé dₚₜ₂ ; et
transmettre le premier rapport cyclique accordé dₚₜ₁ et le deuxième rapport cyclique accordé dₚₜ₂ au circuit d'accord (234).

6. Circuit de correction du facteur de puissance selon la revendication 3, dans lequel le circuit d'accord (234) est configuré pour :
déterminer lesdits instants d'échantillonnage de courants d'inductance en multipliant à la fois le premier rapport cyclique accordé dₚₜ₁ et le deuxième rapport cyclique accordé dₚₜ₂ par ladite période de commutation Tₛ ; et
échantillonner les courants d'inductance dans le premier circuit élévateur et dans le deuxième circuit élévateur aux instants d'échantillonnage déterminés.

7. Circuit de correction du facteur de puissance selon la revendication 3, dans lequel : le condensateur de sortie (C) est connecté à une borne positive et une borne négative d'une sortie de tension continue.

8. Circuit de correction du facteur de puissance selon la revendication 7, dans lequel chacun parmi le premier et le deuxième capteur de courant est un transformateur.

9. Circuit de correction du facteur de puissance selon la revendication 7, dans lequel le circuit d'évaluation (231) est configuré pour activer le circuit d'ajustement (232) :
si les courants d'inductance moyens I_{L1} et I_{L2} sont inférieurs ou égaux à une valeur de seuil ; et
si un premier courant dans la première inductance est inférieur ou égal à une différence entre un deuxième courant dans la deuxième inductance et une valeur de courant d'inductance prédéterminée, et le premier rapport cyclique dₛₚ₁ du premier transistor est supérieur ou égal à une somme du deuxième rapport cyclique dₛₚ₂ du deuxième transistor et d'une valeur de rapport cyclique prédéterminée ; ou
si le premier courant dans la première inductance est supérieur ou égal à une somme du deuxième courant dans la deuxième inductance et de la valeur de courant d'inductance prédéterminée, et le premier rapport cyclique dₛₚ₁ du premier transistor est inférieur ou égal à une différence entre le deuxième rapport cyclique dₛₚ₂ du deuxième transistor et la valeur de rapport cyclique prédéterminée.
